# EUROPEAN PATENT APPLICATION

(11) **EP 2 404 713 A1**
(43) Date of publication of application: **11.01.2012**
(21) Application number: 10748796.9
(22) Date of filing: 04.03.2010
(51) Int. Cl.: B25J 17/00, B25J 9/08, H02K 7/116

(54) **ARTICULATION UNIT FOR ROBOT AND ROBOT**

(30) Priority: 06.03.2009 JP 2009053409
(71) Applicant: Kabushiki Kaisha Yaskawa Denki, Kitakyushu-shi, Fukuoka 806-0004 (JP)
(72) Inventor: MAMBA, Takashi, 806-0004 Fukuoka (JP)
(74) Representative: Gendron, Vincent Christian
(86) International application number: PCT/JP2010/053495
(87) International publication number: WO 2010/101203

(57) **Abstract**

A differential articulation unit and a robot that uses the articulation units are provided. The articulation unit effectively utilizes output of two motors using interference drive in order to increase a weight capacity while reducing the size and the weight thereof.

The articulation unit includes a cover-and-support structure that is a supporting member and functions as a cover externally covering the entirety of a pair of opposing bevel gears and an output bevel gear and that supports the output bevel gear such that the output bevel gear is rotatable. Wave generators of strain wave gearings is each secured concentrically outside a rotor of the outer rotor motor, and the bevel gears are each secured to a circular spline or a flexspline that is an output. The motors, the bevel gears, and the strain wave gearings are each made to have a hollow therein through which wiring is routed.

## Description

### Technical Field

The present invention relates to a small lightweight high-output articulation unit for a robot and a robot that uses the articulation unit.

### Background Art

In a typical articulated robot, an actuator (motor or the like) is assigned to a joint (mover),
and when the joint operates while other joints are stopped, only the motor assigned to the joint in operation mainly performs the task while the motors not in operation are not effectively utilized. This is a general technical problem.
In order to solve this general technical problem, the following robot articulation mechanism is known (see PTL 1). That is, a differential mechanism is used to intentionally cause outputs of two motors to interfere with each other so as to obtain an output torque from each output shaft up to two times the output torque that would otherwise be obtainable.
With a technology disclosed in PTL 1, each motor stator is not secured but rotatably supported, and both stator and rotor are geared, thereby using the both as the output. By doing this, when the motor generates a torque, the rotor rotates if a load exerted on the stator is large, and the stator rotates if the load exerted on the rotor is large. A floating differential mechanism is provided, in which two such motors are used and the stator and the rotor of one of the motors are respectively made to interfere with the stator and the rotor of the other motor. In order to prevent the stator coil from being twisted during rotation, a slip ring is used. Alternatively, a semi-floating differential mechanism is also proposed, in which the motors are secured and ordinarily secured parts of the gears are made to be rotatable such that those secured parts interfere with each other.
In addition, there is another differential mechanism using bevel gears, in which motors are disposed in the bevel gears in order to reduce the differential mechanism in size (see PTL 2).

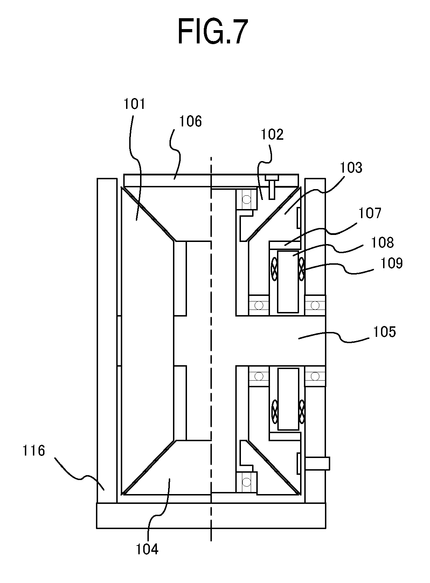

In Fig. 7, reference numerals 101 to 104 are bevel gears, each of which is mounted on cross shafts 105 using a bearing and constitutes part of the differential mechanism. A magnet 107 is secured inside of a bevel gear 103, which also functions as an outer rotor of a motor. A coil 109 and a stator 108 are secured to a motor case 116 in order to generate a torque that rotates the bevel gear 103. A bevel gear 101 has a structure the same as that of the bevel gear 103. The bevel gear 102 swings about the horizontal axis of the cross shafts 105 in accordance with an average of the amount or rotation of the bevel gear 101 and the bevel gear 103, and rotates about the vertical axis in accordance with the difference between the amounts of rotation of the bevel gear 101 and the bevel gear 103. An output body 106 is secured to a bevel gear 102. Thus, rotations about the two axes, that is, the vertical and horizontal axes, of the cross shafts 105 are output.
As described above, the related art interference driven mechanism is either the floating differential mechanism in which the motor stators are rotatably supported or a bevel gear differential mechanism that uses the cross shafts.

### Citation List

### Patent Literature

PTL 1: Japanese Patent No. 3282966 (page 7, Fig. 2)
PTL 2: Japanese Unexamined Patent Application Publication No. 6-197492 (page 4, Fig. 2)

### Summary of Invention

### Technical Problem

However, both of the articulation units for a robot disclosed in PTLs 1 and 2 are floating differential mechanisms in which the motor stators are rotatably supported. These articulation units need bearings that support motor stators, spur gears or bevel gears used to cause the motor output shafts to interfere with each other, bearings that support the shafts of the gears, and so forth. Thus, the mechanism cannot be simplified and, accordingly, it is difficult to reduce the mechanism in size.
A bevel gear differential mechanism using the cross shafts as disclosed in PTL 2 includes the cross shafts in the center. This causes another problem in that the two motors or two gears need to be separated from each other by more than the width of the vertical shaft, and accordingly, the degree of reducing the articulation unit in size and weight is limited.
The present invention is proposed in view of the above-described problems. The object of the invention is to provide an articulation unit for a robot and a robot, which are small in size and light in weight and allow an output torque of the joint portion to be improved.

### Solution to Problem

To solve the above-described problems, the present invention has the following structure.
According to the invention described in Claim 1, an articulation unit for a robot includes an articulation mechanism that includes a pair of opposing bevel gears, a pair of motors that rotate the pair of opposing bevel gears independently of each other, an output bevel gear that is engaged with each of the pair of opposing bevel gears and is supported so as to be rotatable and so as to be swingable in rotational directions of the pair of opposing bevel gears, and an output body that is secured to the output bevel gear, a cover-and-support structure that is a supporting member and functions as a cover externally covering the entirety of the articulation mechanism, and a swing mechanism that supports the cover-and-support structure such that the cover-and-support structure is swingable in the rotational directions of the pair of opposing bevel gears.

Preferably, the articulation unit for a robot further includes a pair of support discs that are disposed so as to sandwich the pair of motors and each have a cylindrical portion therein, in which the support discs support the cover-and-support structure with outer surfaces of the cylindrical portions using bearings (Claim 2).
Preferably, the articulation unit for a robot further includes a pair of strain wave gearings that includes respective circular splines and respective flexsplines and that respectively increase torques of the pair of motors, in which each of the pair of motors is an outer rotor motor in which a rotor is disposed outside a stator, in which the strain wave gearings each have a hollow in a wave generator thereof. In this case, the hollows contain the respective outer rotor motors, the wave generators are inputs of the respective strain wave gearings, the wave generators are secured concentrically outside the rotors of the respective outer rotor motors, and the pair of opposing bevel gears are secured to members that integrally rotate with the circular splines or the flexsplines that are output bodies of the pair of strain wave gearings (Claim 3).

Preferably, the wave generators each include a magnet, and the wave generators also function as the rotors of the respective outer rotor motors (Claim 4).
Preferably, second bearings that support the circular splines or the flexsplines each have a hollow that contains the corresponding outer rotor motor therein, and the second bearings are disposed concentrically outside the rotors of the respective outer rotor motors (Claim 5).
Preferably, the pair of bevel gears each have a hollow therein that contains the corresponding motor, and the hollows are disposed concentrically outside the respective outer rotor motors (Claim 6).
Preferably, the articulation unit for a robot further includes a pair of support discs that are disposed so as to sandwich the pair of motors and each have a cylindrical portion therein, and the support discs each support the circular spline or the flexspline, which is a fixed portion of the strain wave gearing, with an end surface of the cylindrical portion thereof (Claim 7).
Preferably, each of the pair of motors is an outer rotor motor, in which a rotor is disposed outside a stator, and third bearings, which support the rotors of the outer rotor motors such that the rotors are rotatable, are provided. In this case, the third bearings each have a hollow therein that contains the corresponding outer rotor motor, and the bearing is disposed concentrically outside the stator of the outer rotor motor (Claim 8).

Preferably, the articulation unit for a robot further includes a pair of support discs that are disposed so as to sandwich the pair of motors and each have a cylindrical portion therein, in which the support discs each support the rotor of the corresponding outer rotor motor with an inner surface of the cylindrical portion using the third bearing (Claim 9).
Preferably, the output bevel gear and the output body each have a hollow (in the axis direction) formed therein. In this case, the hollows allow wiring to be routed therethrough (Claim 10).
Preferably, the output body is rotatably supported with an output body support bearing from the outside of a rotation axis thereof, and a slip ring is provided between the output body support bearing and the output bevel gear (Claim 11).
Preferably, a hollow that allows wiring to be routed therethrough is formed in each of the pair of bevel gears and each of the pair of motors (Claim 12).
Preferably, the articulation unit for a robot further includes a cooling fan that blows air toward the hollow in each of the pair of opposing bevel gears and each of the pair of motors so as to cool the pair of motors (Claim 13).
Preferably, the articulation unit for a robot further includes a support base having a hollow space formed therein and a pair of hollow support arms that route wiring toward the support base. The wiring has been routed through the pair of motors and divided into left and right (Claim 14).
Preferably, electric circuitry that drives each of the pair of motors is disposed in the hollow space in the support base (Claim 15).

Preferably, the articulation unit for a robot further includes a pair of encoders that detect positions of the rotors of the pair of motors. In this case, encoder circuitry that processes encoder signals of the pair of encoders and transmits resultant signals to an upper level controller is disposed in the hollow space in the support base (Claim 16).
Preferably, the support base has a hole, through which the wiring is routed, in a lower surface thereof (Claim 17).
Preferably, a lower surface of the support base and an upper surface of the output body have screw holes formed therein in order to fasten the support base to the output body, the support base to the support base, or the output body to the output body (Claim 18).
Preferably, a lower surface of the support base and an upper surface of the output body each include an engagement interface so as to provide an engaged connection between the support base and the output body, the support base and the support base, or the output body and the output body (Claim 19).
Preferably, rotors of the pair of motors are supported using a common bearing (Claim 20).

Preferably, the circular splines or the flexsplines of the pair of strain wave gearings are supported using a common bearing (Claim 21).
The invention (robot) described in Claim 22 includes at least one articulation unit for a robot according to one of Claims 1 to 21 and a robot base that secures the articulation unit to a floor surface or a body of the robot.
Preferably, the at least one articulation unit for a robot includes three articulation units, in which the three articulation units for a robot are arranged in series, and two out of the three articulation unit are oriented so as to allow the support base of one of the two articulation units to be fastened to the output body of the other articulation unit, and in which the support base of the remaining one articulation unit is fastened to the support base of one of the two articulation units (Claim 23).
Preferably, the robot further includes a robot base with a swivel axis motor, one surface of the robot base being secured to the floor surface or the body of the robot, and the robot base is provided with a motor that rotates the other surface of the robot base about an axis vertical to the secured surface, in which the at least one articulation unit for a robot includes three articulation units, and in which the three articulation units for a robot are connected in series with the support bases fastened to the output bodies, except the support base of the terminal articulation unit is fastened to the robot base with the swivel axis motor (Claim 24).

### Advantageous Effects of Invention

According to the invention described in Claim 1, the output bevel gear can be supported without disposing the cross shafts or the like at the center. Thus, the motors can be disposed as close to each other as possible, or the encoder can be disposed at the center. Since the cover functions as the support member of the bevel gear shafts, reduction in size is achievable.
In addition, according to the inventions in the present application (Claims 1 and 22), the cover-and-support structure covers the inside and the outside of the articulation unit. This prevents lubricants or metal wear powders from outwardly scattering and the articulation mechanism from being in contact with or in interference with an external element, thereby ensuring safety and durability.
According to the invention described in Claim 2, the support structure can be disposed directly outside the pair of motors without disposing a bearing or the like, thereby allowing the size in the motor shaft directions to be reduced.
According to the invention described in Claim 3, the strain wave gearings, which are typically disposed adjacent to the motors in the motor shaft directions, can be disposed concentrically outside the respective outer rotor motor, thereby allowing the size in the motor shaft directions to be reduced. When the articulation units are used as the joints or the like of a robot, a situation in which thick arms of the robot cause the joints to interfere with each other is avoided, thereby enlarging a moving range of the robot.
Since the articulation unit operates using gearings, it is clear that the articulation unit can be reduced in size while obtaining a sufficient torques due to space conservation compared to direct driving without a gear.

According to the invention described in Claim 4, since the number of components in the articulation unit can be reduced, the cost and size of the articulation unit can be reduced.
According to the invention described in Claim 5, the support bearings for the strain wave gearings, which are typically disposed adjacent to the motors in the motor shaft directions, can be disposed concentrically outside the respective motors, thereby allowing the size in the motor shaft directions to be reduced.
According to the invention described in Claim 6, the bevel gears, which are typically disposed adjacent to the motors in the motor shaft directions, can be disposed concentrically outside the respective motors, thereby allowing the size in the motor shaft directions to be reduced.
According to the invention described in Claim 7, the flexsplines or the circular splines that are assumed to be fixed portions can be easily secured to the strain wave gearings even when the strain wave gearings are disposed concentrically outside the corresponding motors.
According to the inventions described in Claims 8 to 9, the motor rotor support bearing, which is typically disposed adjacent to the motors in the motor shaft directions, can be disposed concentrically outside the motors, thereby allowing the size in the motor shaft to be reduced.
According to the invention described in Claim 10, the wiring connected to the end of the output body can be routed near the rotation axes of the output body. Thus, the wiring is less likely to be bent or twisted during the movement of the joint, and accordingly, less likely to be broken. Since the wiring can be contained in the articulation unit, the wiring is less likely to interfere with work space, thereby allowing a teaching operation to be easily performed.
That is, compared to the wiring routed outside the articulation unit, reduction of the movable range due to a situation in which the wiring easily interferes with obstacles in a work area of the robot or other links of the arm can be prevented.

According to the invention described in Claim 11, even when the pair of motors or strain wave gearings are disposed as close to each other as possible, the wiring can be routed in the articulation unit. Thus, the articulation unit can be less likely to interfere with the work space and the teaching operation can be easily performed.
According to the invention described in Claim 12, the wiring can be routed near the rotation axes of the joint. Thus, the wiring is less likely to be bent or twisted during the movement of the joint, and accordingly, less likely to be broken. Since the wiring can be contained in the articulation unit, the wiring is less likely to interfere with the work space, thereby allowing the teaching operation to be easily performed.
According to the invention described in Claim 13, the motors can be effectively cooled using the hollows formed in the stators.
According to the invention described in Claim 14, the wiring can be covered with the support structure. This can prevent the wiring to be broken even in such a case in which the articulation unit collides against an external environment. This can make the articulation unit less likely to interfere with the work space, and allows the teaching operation to be easily performed.
According to the invention described in Claim 15, the drive circuitry of the two motors can be integrally disposed in one position. This allows the circuitry to be reduced in size, power to be saved, and the cost of the circuitry to be reduced by, for example, sharing the same power circuitry.

According to the invention described in Claim 16, two encoder circuits can be integrally disposed in one position. This also allows the circuits to be reduced in size, power to be saved, and the cost of the circuitry to be reduced by, for example, sharing the same power circuitry.
Since the encoders detect positions of the rotors of the motors, it is clear that a feed back control can be used to allow the operation to be performed with precision. According to the invention described in Claim 17, wiring from a device externally connected to the support base can be routed into the articulation unit, or, inversely, wiring from the articulation unit can be easily routed into the other device.
According to the inventions described in Claims 18 to 19, a manipulator can be formed by connecting the support base and the output body.

According to the invention described in Claim 20, the pair of motors can be disposed immediately close to each other, thereby allowing the size in the motor shaft directions to be reduced.
According to the invention described in Claim 21, the pair of strain wave gearings can be disposed immediately close to each other, thereby allowing the size in the motor shaft directions to be reduced.
According to the invention described in Claim 23, a general six-degree-of-freedom manipulator that is small in size and light in weight and has a large weight capacity can be formed using the differential articulation units.
According to the invention described in Claim 24, a general seven-degree-of-freedom manipulator that is small in size and light in weight and has a large weight capacity can be formed using the differential articulation units.

### Brief Description of Drawings

[Fig. 1] Fig. 1 is a sectional view of an articulation unit of a first embodiment according to the present invention.
[Fig. 2] Fig. 2 is a sectional view of the articulation unit of a second embodiment according to the present invention (upper half).
[Fig. 3] Fig. 3 is a sectional view of the articulation unit of a third embodiment according to the present invention (upper half).
[Fig. 4] Fig. 4 illustrates the appearance of the articulation unit of the first to third embodiments.
[Fig. 5] Fig. 5 illustrates the appearance of a seven-degree-of-freedom robot arm of a fourth embodiment.
[Fig. 6] Fig. 6 illustrates the appearance of a six-degree-of-freedom robot arm of a fifth embodiment.
[Fig. 7] Fig. 7 is a sectional view of a related art differential gear mechanism.

### Description of Embodiments

Embodiments according to the present invention will be described below with reference to the drawings.

### First Embodiment

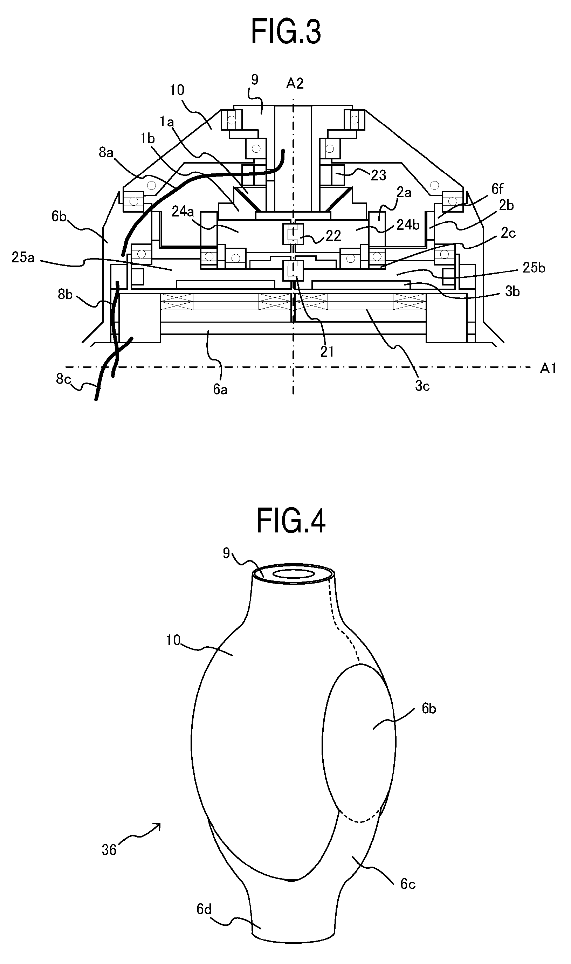

A first embodiment according to the present invention will be described. Fig. 4 is a diagram of the appearance of an articulation unit 36 of the present embodiment. A cover-and-support structure 10 rotates about a horizontal axis A1 with a support disc 6b at the center, and an output body 9 rotates about a vertical axis A2.

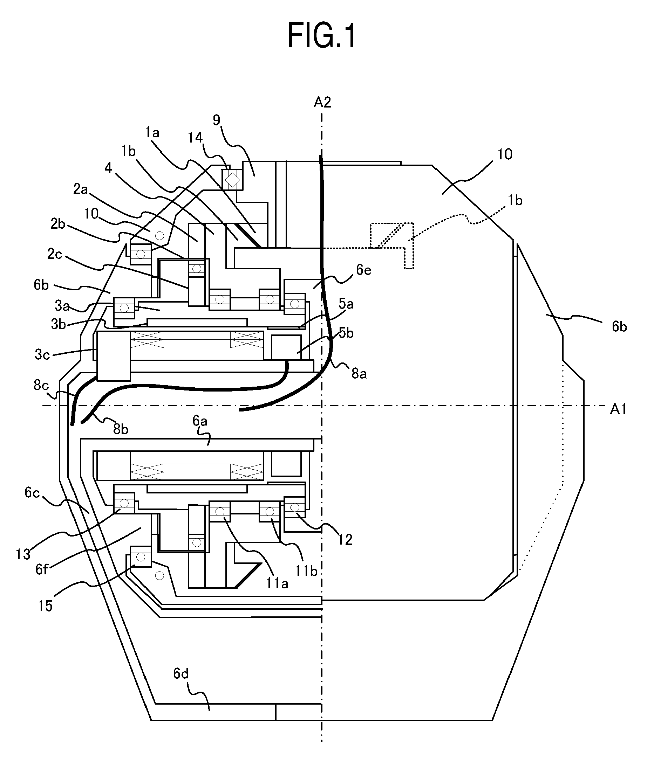

Fig. 1 is a sectional view of a differential articulation unit according to the present invention. In this figure, a bevel gear (output bevel gear) 1a integrally rotates with the output body 9, and bevel gears 1b (a pair of bevel gears) that are a pair of bevel gears symmetrically provided relative to the vertical axis A2 are separately driven by rotations of a pair of motors 3 (outer rotor motors), which will be described later (rotation axes parallel to the axis A1).
The support discs 6b include cylindrical portions 6e formed therein, which constitute part of an outer envelope of the articulation unit 36, are disposed so as to sandwich the pair of motors 3, and extend in a cylindrical shape from a disc-shaped region in the horizontal axis A1 direction (and inwardly in the articulation unit 36). Cylindrical portions 6e are made to be in contact with bearings 13 and bearings 15, which are described later.

An articulation mechanism that performs articulating operation includes the pair of bevel gears 1b, 1b, the pair of motors 3, 3, the bevel gear 1a, and the output body 9.
The motors 3 and the bevel gears 1b are provided in such a way that two sets of the motor 3 and the bevel gear 1b having similar structures are symmetrically disposed relative to the vertical axis A2.
Each outer rotor motor 3 is connected to the corresponding bevel gear 1b so as to allow each of the bevel gears 1b to be independently driven. A differential mechanism 1 includes the combination of the bevel gear 1a and the pair of bevel gears 1b. That is, with a rotational difference between the pair of bevel gears 1b, the output body 9 rotates about the rotation axis A2.
Reference numeral 2a denotes a circular spline, reference numeral 2b denotes a flexspline, and reference numeral 2c denotes a wave generator. These components are included in a strain wave gearing 2.
Reference numeral 3a denotes a motor rotor core, reference numeral 3b denotes a motor magnet, and reference numeral 3c denotes a motor coil. These components are included in the outer rotor motor 3. The motor coil 3c is secured to an outer periphery of a cylindrical hollow shaft 6a. The motor magnet 3b and the motor rotor core 3a are included in a rotor, which is rotated by a torque generated between the rotor and the motor coil 3c. The motor rotor core 3a is rotatably supported around the horizontal axis A1 using a bearing 12 and the bearing 13. The motor rotor core 3a is secured to the wave generator 2c and rotates the wave generator 2c.

The motor rotor core 3a and the wave generator 2c may be fabricated as a single component. Such a structure allows the resultant component to be further reduced in size. In other words, the motor magnet 3b may be directly secured to the wave generator 2c with adhesive or screws.
Rotation of the wave generator 2c is decelerated and transferred to the circular spline 2a. Reference numeral 4 denotes a rotary hollow cylinder, which is rotatably secured to an outer periphery of the motor rotor core 3a so as to be concentrically outside a motor shaft using bearings 11a and 11b.
The circular spline 2a and the bevel gear 1b are secured to the rotary hollow cylinder 4 and rotate at a decelerated speed.

Although the flexspline 2b is secured to the support disc 6b and the circular spline 2a is used as an output in the present embodiment, the following structure may instead be used. That is, by horizontally flipping the whole strain wave gearing, the circular spline 2a is secured to the support disc 6b, and the flexspline 2b is used as an output.

With the differential articulation unit having a structure as above, a transport object attached to the end of the output body 9 can be rotated about the horizontal axis and the vertical axis. These two output axes are structured as an interference driven mechanism. Accordingly, the two axes can each generate an output up to two times the output with a single motor. The hollow shaft 6a is secured to the support disc 6b. The support disc 6b is connected to a support base 6d through a hollow support arm 6c.
A fixed component of an encoder 5b is secured outside the motor rotor 3a and reads the scale of the encoder rotor 5a.
A support structure from the hollow shaft 6a to the support base 6d includes a hollow space penetrating therethrough, which allows wiring to be routed thereinside. The wiring includes a shown motor power cable 8c that supplies power to the motor coils 3c of the differential articulation unit, a shown encoder signal cable 8b that transfers a signal from the fixed component of the encoder 5b of the differential articulation unit to a controller, and so forth. The wiring also includes an external device cable 8a, which is wiring from a device such as another differential articulation unit connected to the end of the output body 9. The external device cable 8a is routed inside the hollow shaft 6a through a hollow space of the output body 9 and a hole formed at an upper area of the central fixed disc 6e. Since the wiring can be routed near the vertical and horizontal rotation axes, the wiring is less likely to be loosened or stretched during the movement of the joint. Thus, durability in repetitive operation can be improved.

A robot and the articulation unit thereof of the first embodiment according to the present invention have the structure described as above. Thus, by disposing the strain wave gearing, which is typically disposed separately from the motor in the motor shaft direction, concentrically outside the outer rotor motor, the articulation unit can be reduced in size in the motor shaft A1 direction.
When the bevel gear 1b and another bevel gear that is not shown and disposed at a position symmetrical to the bevel gear 1b rotate in the same direction at the same speed, the bevel gear 1a does not rotate about the vertical axis A2. Instead, the bevel gear 1a rotates about the horizontal axis A1 integrally with the output body 9 and the cover-and-support structure 10 supported using the bearing 15. When the bevel gear 1b and the other bevel gear that is not shown and disposed at the position symmetrical to the bevel gear 1b rotate at different speeds, the bevel gear 1a rotates about the vertical axis A2 in accordance with the difference.

In Fig. 1, in order to transfer the rotation about the horizontal axis A1, the teeth of the bevel gear 1a support the whole torque. However, the torque may be supported by a plurality of gears in a distributed manner by providing freely rotating bevel gears at a plurality of positions in the lower side symmetrical to the bevel gear 1a or along the circumference of the bevel gear 1a. By doing this, damage to the teeth of the bevel gears can be reduced. The backlash can be also reduced by reducing the modules (dimensions) of the gears.
Furthermore, since a strain wave gearing is generally fabricated in a flat configuration more easily than a motor is, each bevel gear 1b is arranged adjacent to the strain wave gearing in the axial direction in the present embodiment. However, the wave generator 2c may be disposed adjacent to the motor 3 in the axial direction, and the bevel gear 1b may be disposed concentrically outside the circular spline 2a. In this case, the motor may not be an outer rotor motor.

As described above, the articulation unit of the present embodiment supports the bevel gear 1a with the cover-and-support structure 10, which is a supporting member and functions as a cover, without use of cross shafts. A hollow space having a size sufficient to contain the motor 3 is provided in the strain wave gearing 2, the strain wave gearing 2 is disposed concentrically outside the motor 3, and the hollow space is disposed concentrically outside the outer rotor motor 3 as a hollow space that is sufficiently large in order to receive the motor therein. The bearing 12 and the bearing 13, which support the rotor, are disposed concentrically outside an outer rotor motor stator as hollow spaces that are sufficiently large to receive the motor therein. The output body 9 and the hollow shaft 6a are formed so as to have hollow spaces through which the wiring is routed, and the hollow shaft 6a is fixed. Thus, gearings and bevel gears, which are disposed in the motor shaft directions in a typical robot articulation unit, can be contained in a nested manner, thereby reducing the articulation unit in size.
In addition, since drive force of the pair of motors 3 can be caused to collectively act on the horizontal axis A1 or the vertical axis A2, the maximum output torque of the horizontal axis A1 or vertical axis A2 with respect to the size of the articulation unit can be improved.

Thus, compared to the related art technology as disclosed, for example, in PTL 2, the motors can be disposed as close to each other as possible due to the elimination of the bearings between the central cross shafts and the motors, and accordingly, the articulation unit can be reduced in size. Alternatively, due to the elimination of the bearings between the central cross shafts and the motors, encoders can instead be disposed in that space. In addition, since the shaft (output shaft) has a hollow inside space, the wiring can be routed therein. (4) There is an advantage that the articulation unit is small in size and lightweight since the cover functions as the supporting member.

### Second Embodiment

Next, a second embodiment according to the present invention will be described. The present embodiment and the above-described first embodiment have a number of common features. Accordingly, explanations of features the same as those of the first embodiment are omitted from the description of the present embodiment, and the same reference numerals are used for similar components.

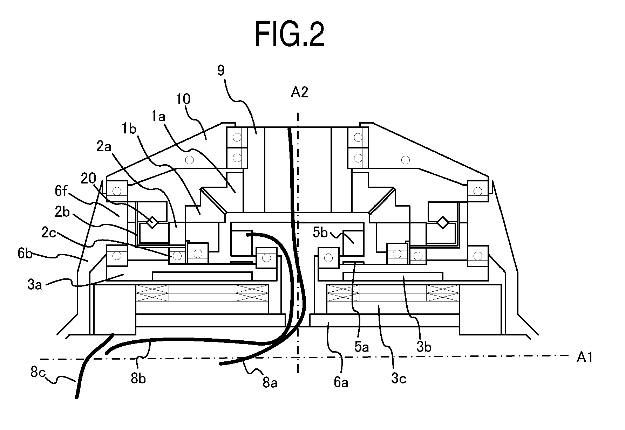

Fig. 2 is a sectional view of another embodiment of the articulation unit according to the present invention. Here, since the articulation unit has a structure that is symmetrical relative to the horizontal axis A2 except for the support arm, the support base, and the output body, only the upper half of the articulation unit is illustrated for the simplicity of the explanation. Also in Fig. 2, only one of each pair of components symmetrically disposed at the left and right is denoted by a reference numeral.

In the present embodiment, the wave generator 2c is integrated with the motor rotor 3a. Reference numeral 2b denotes the flexspline. Unlike the strain wave gearing of the first embodiment, the present embodiment uses the strain wave gearing including the flexspline 2b having a flange opening toward the outside. Reference numeral 20 denotes a cross roller bearing. An outer ring of the cross roller bearing 20 is secured to the support disc 6b with the flexspline 2b disposed therebetween. The inner ring of the cross roller bearing 20 is secured to the circular spline and rotates together with the bevel gear 1b. In the present embodiment, the wave generator 2c is disposed concentrically outside the outer rotor motor, and the bevel gear 1b is disposed further concentrically outside the circular spline 2a of the strain wave gearing.
The fixed component of the encoder 5b reads the scale of the encoder rotor 5a secured outside the motor rotor 3b.

### Third Embodiment

Next, a third embodiment according to the present invention will be described. The present embodiment and the above-described first embodiment have a number of common features. Accordingly, explanations of features the same as those of the first embodiment are omitted from the description of the present embodiment, and the same reference numerals are used for similar components.
As illustrated in Fig. 3, since the articulation unit has a structure that is substantially symmetrical relative to the axis except for the support arm, the support base, and the output body, only the upper half of the articulation unit is illustrated. Also in Fig. 3, only one of each pair of components symmetrically disposed at the left and right is denoted by a reference numeral.
Reference numeral 21 denotes a roller bearing that supports loads of left and right motor rotor cores 25a and 25b in thrust and radial directions such that the left and right motor rotor cores 25a and 25b are rotatable relative to each other about the horizontal axis.
Reference numeral 22 is a roller bearing. Likewise, the roller bearing 22 supports loads of left and right rotary hollow cylinders 24a and 24b in thrust and radial directions such that the left and right rotary hollow cylinders 24a and 24b are rotatable relative to each other about the horizontal axis.

In the present embodiment, the roller bearing 21 and the roller bearing 22 are used. Alternatively, thrust bearings, four-point contact bearings, or the like may be used. It is sufficient that these bearings may have a related art structure that can support loads in the thrust and radial directions while being rotatable relative to each other.
Such a structure allows the pair of motors 3 to be disposed immediately close to each other, thereby eliminating dead space. Thus, the articulation unit 36 can be reduced in size, or output torques can be improved while keeping the size of the articulation unit.
The size in the motor shaft directions can be further reduced. Also in the present embodiment, a slip ring 23 is provided, and a hole is formed in the support disc 6b in order to route the external device cable 8a therethrough into the hollow shaft 6a. By doing this, the external device cable 8a can be disposed without being routed in a gap between the motors 3.

### Fourth Embodiment

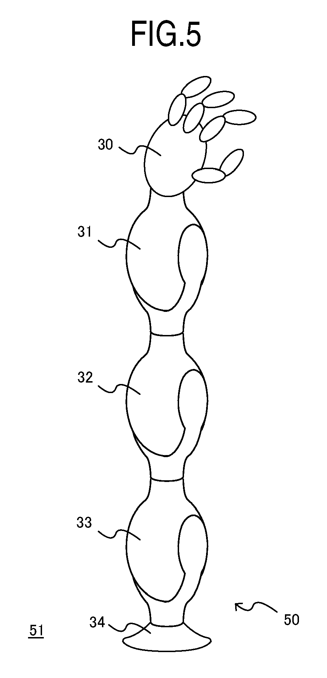

Next, a fourth embodiment according to the present invention will be described. The present embodiment describes a seven-degree-of-freedom robot (robot arm) using the articulation units described in the first to third embodiments.
As illustrated in Fig. 5, a robot arm 50 includes a robot base with a swivel axis motor 34, an articulation unit a 31, an articulation unit b 32, an articulation unit c 33, and a hand 30.
The robot base with a swivel axis motor 34 is a base (pedestal) that secures the robot arm 50 to a fixed surface 51 (for example, a floor of a factory) and is provided with a motor that rotates the whole robot arm 50 about the vertical axis.

The articulation unit a 31, the articulation unit b 32, and the articulation unit c 33 are connected in series. Reference numeral 30 denotes the hand that is an end effecter, of which the position and the attitude are controlled by this robot arm, performing tasks such as transportation, assembly, and welding.
Due to the structure of the present embodiment as above, a seven-degree-of-freedom vertical articulated robot is achieved, of which the maximum output is improved while the robot arm 50 is reduced in size (particularly, in thickness).

### Fifth Embodiment

Next, a fifth embodiment according to the present invention will be described. As in the case with the fourth embodiment, the articulation unit described in the first to third embodiments is also applied to the robot (robot arm) in the present embodiment.

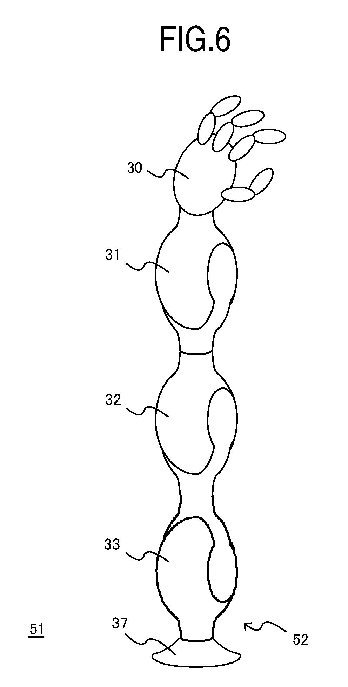

Fig. 6 is a diagram of the appearance of a six-degree-of-freedom robot arm using the articulation units of the present embodiment.
As described in Fig. 6, a robot arm 52 includes a robot base 37, the articulation unit a 31, the articulation unit b 32, the articulation unit c 33, and the hand 30.
The robot base 37 is a base that secures the robot arm 50 to the fixed surface 51 (for example, a floor of a factory).

In the present embodiment, the orientation of the articulation unit c 33 is reversed compared to that in the fourth embodiment. That is, the support base 6d of the articulation unit a 31 is connected to the output body 9 of the articulation unit b 32, the support base 6d of the articulation unit b 32 is connected to the support base 6d of the articulation unit c 33, and the output body 9 of the articulation unit c 33 is secured to the robot base 37.
Due to the structure of the present embodiment as above, a six-degree-of-freedom vertical articulated robot is achieved, of which the maximum output is improved while the robot arm 50 is reduced in size (particularly, in thickness).

### Industrial Applicability

By unitizing the joint, a small lightweight two-degree-of-freedom drive mechanism is achieved. This technology is applicable to pet robots movable with wheels or legs, home use robots including humanoid robots, service robots, and entertainment robots. The technology is also applicable to machine tools, construction machines, angle and attitude controllers of measurement instruments for cameras and laser mirrors, and so forth.

### Reference Signs List

- 1a: bevel gear
- 1b: bevel gear
- 2a: circular spline
- 2b: flexspline
- 2c: wave generator
- 3a: motor rotor core
- 3b: motor magnet
- 3c: motor coil
- 4: rotary hollow cylinder
- 5a: encoder rotor
- 5b: fixed component of an encoder
- 6a: hollow shaft
- 6b: support disc
- 6c: hollow support arm
- 6d: support base
- 6e: central fixed disc
- 6f: cylindrical portion
- 8a: external device cable
- 8b: encoder signal cable
- 8c: motor power cable
- 9: output body
- 10: cover-and-support structure
- 11a: bearing
- 11b: bearing
- 12: bearing
- 13: bearing
- 14: output body support bearing
- 15: bearing
- 20: cross roller bearing
- 21: roller bearing
- 22: roller bearing
- 23: slip ring
- 24a: rotary hollow cylinder
- 24b: rotary hollow cylinder
- 25a: motor rotor core
- 25b: motor rotor core
- 30: hand
- 31: articulation unit a
- 32: articulation unit b
- 33: articulation unit c
- 34: robot base with a pivot motor
- 35: robot base
- 36: articulation unit
- 37: robot base
- 50: robot arm
- 51: fixed surface
- 52: robot arm
- 101: bevel gear
- 102: bevel gear
- 103: bevel gear
- 104: bevel gear
- 105: cross shafts
- 106: output body
- 107: magnet
- 108: stator
- 109: coil
- 116: motor case

## Claims

1. An articulation unit for a robot, comprising:
an articulation mechanism that includes
a pair of opposing bevel gears,
a pair of motors that rotate the pair of opposing bevel gears independently of each other,
an output bevel gear that is engaged with each of the pair of opposing bevel gears and is supported so as to be rotatable and so as to be swingable in rotational directions of the pair of opposing bevel gears, and
an output body that is secured to the output bevel gear;
a cover-and-support structure that is a supporting member and functions as a cover externally covering the entirety of the articulation mechanism; and
a swing mechanism that supports the cover-and-support structure such that the cover-and-support structure is swingable in the rotational directions of the pair of opposing bevel gears.

2. The articulation unit for a robot according to Claim 1, further comprising:
a pair of support discs that are disposed so as to sandwich the pair of motors and each have a cylindrical portion therein,
wherein the support discs support the cover-and-support structure with outer surfaces of the cylindrical portions using bearings.

3. The articulation unit for a robot according to Claim 1 or 2, further comprising:
a pair of strain wave gearings that respectively increase torques of the pair of motors,
wherein each of the pair of motors is an outer rotor motor, in which a rotor is disposed outside a stator,
wherein the strain wave gearings each have a hollow in a wave generator thereof, the hollows containing the respective outer rotor motors, the wave generators being inputs of the respective strain wave gearings,
wherein the wave generators are secured concentrically outside the rotors of the respective outer rotor motors, and
wherein the pair of opposing bevel gears are secured to members that integrally rotate with the circular splines or the flexsplines, the circular splines or the flexsplines being output bodies of the pair of strain wave gearings.

4. The articulation unit for a robot according to Claim 3, wherein the wave generators each include a magnet, and wherein the wave generators also function as the rotors of the respective outer rotor motors.

5. The articulation unit for a robot according to Claim 3 or 4,
wherein second bearings that support the circular splines or the flexsplines each have a hollow that contains the corresponding outer rotor motor therein, and
wherein the second bearings are disposed concentrically outside the rotors of the respective outer rotor motors.

6. The articulation unit for a robot according to one of Claims 1 to 5,
wherein the pair of bevel gears each have a hollow therein that contains the corresponding motor, the hollows being disposed concentrically outside the respective outer rotor motors.

7. The articulation unit for a robot according to Claim 5 or 6, further comprising:
a pair of support discs that are disposed so as to sandwich the pair of motors and each have a cylindrical portion therein, and
wherein the support discs each support the circular spline or the flexspline, the circular spline or the flexspline being a fixed portion of the strain wave gearing, with an end surface of the cylindrical portion thereof.

8. The articulation unit for a robot according to one of Claims 1 to 7,
wherein each of the pair of motors is an outer rotor motor, in which a rotor is disposed outside a stator,
wherein third bearings, which support the rotors of the outer rotor motors such that the rotors are rotatable, are provided, and
wherein the third bearings each have a hollow therein that contains the corresponding outer rotor motor, the bearing being disposed concentrically outside the stator of the outer rotor motor.

9. The articulation unit for a robot according to claim 8, further comprising:
a pair of support discs that are disposed so as to sandwich the pair of motors and each have a cylindrical portion therein,
wherein the support discs each support the rotor of the corresponding outer rotor motor with an inner surface of the cylindrical portion using the third bearing.

10. The articulation unit for a robot according to one of Claims 1 to 9,
wherein the output bevel gear and the output body each have a hollow formed therein, the hollows allowing wiring to be routed therethrough.

11. The articulation unit for a robot according to one of Claims 1 to 10,
wherein the output body is rotatably supported with an output body support bearing from the outside of a rotation axis thereof, and
wherein a slip ring is provided between the output body support bearing and the output bevel gear.

12. The articulation unit for a robot according to one of Claims 1 to 11,
wherein a hollow that allows wiring to be routed therethrough is formed in each of the pair of bevel gears and each of the pair of motors.

13. The articulation unit for a robot according to Claim 12, further comprising:
a cooling fan that blows air toward the hollow in each of the pair of opposing bevel gears and each of the pair of motors so as to cool the pair of motors.

14. The articulation unit for a robot according to Claim 12, further comprising:
a support base having a hollow space formed therein and a pair of hollow support arms that route wiring toward the support base, the wiring having been routed through the pair of motors and divided into left and right.

15. The articulation unit for a robot according to Claim 14,
wherein electric circuitry that drives each of the pair of motors is disposed in the hollow space in the support base.

16. The articulation unit for a robot according to Claim 14, further comprising:
a pair of encoders that detect positions of the rotors of the pair of motors,
wherein encoder circuitry is disposed in the hollow space in the support base, the encoder circuitry processing encoder signals of the pair of encoders and transmitting resultant signals to an upper level controller.

17. The articulation unit for a robot according to Claim 14,
wherein the support base has a hole, through which the wiring is routed, in a lower surface thereof.

18. The articulation unit for a robot according to Claim 14,
wherein a lower surface of the support base and an upper surface of the output body have screw holes formed therein in order to fasten the support base to the output body, the support base to the support base, or the output body to the output body.

19. The articulation unit for a robot according to Claim 14,
wherein a lower surface of the support base and an upper surface of the output body each include an engagement interface so as to provide an engaged connection between the support base and the output body, the support base and the support base, or the output body and the output body.

20. The articulation unit for a robot according to one of Claims 1 to 19,
wherein rotors of the pair of motors are supported using a common bearing.

21. The articulation unit for a robot according to one of Claims 3 to 5,
wherein the circular splines or the flexsplines of the pair of strain wave gearings are supported using a common bearing.

22. A robot comprising:
at least one articulation unit for a robot according to one of Claims 1 to 21; and
a robot base that secures the articulation unit to a floor surface or a body of the robot.

23. The robot according to Claim 22,
wherein the at least one articulation unit for a robot comprises three articulation units,
wherein the three articulation units are arranged in series, and two out of the three articulation units are oriented so as to allow the support base of one of the two articulation units to be fastened to the output body of the other articulation unit, and
wherein the support base of the remaining one articulation unit is fastened to the support base of one of the two articulation units.

24. The robot according to Claim 22, further comprising:
a robot base with a swivel axis motor, one surface of the robot base being secured to the floor surface or the body of the robot, the robot base being provided with a motor that rotates the other surface of the robot base about an axis vertical to the secured surface,
wherein the at least one articulation unit for a robot comprises three articulation units, and
wherein the three articulation units for a robot are connected in series with the support bases fastened to the output bodies except the support base of the terminal articulation unit is fastened to the robot base with the swivel axis motor.
